# DEMANDE DE BREVET EUROPEEN

(11) **EP 0 851 141 A1**
(43) Date de publication de la demande: **01.07.1998**
(21) Numéro de dépôt: 97403089.2
(22) Date de dépôt: 19.12.1997
(51) Int. Cl.: F16D 65/12, F16B 5/06

(54) **Dispositif d'assemblage d'un disque de frein sur un moyeu d'essieu de véhicle automobile**

(30) Priorité: 31.12.1996 FR 9616305
(71) Demandeur: RENAULT, 92109 Boulogne-Billancourt (FR)
(72) Inventeur: Baudoin, Philippe, 92290 Chatenay Malabry (FR); Foort, Jean-Benoît, 92500 Rueil Malmaison (FR); Paul, Patrice, 95100 Argenteuil (FR)

(57) **Abrégé**

Dispositif d'assemblage d'un disque (1) de frein sur un moyeu (2) de véhicule automobile, dans lequel le disque (1) de frein est maintenu en appui sur un collet radial du moyeu (2), lesdits disque (1) et moyeu (2) comportant des perçages axiaux, caractérisé en ce que le disque (1) est solidarisé au moyeu (2) par une douille (3) tubulaire déformable susceptible d'occuper une position retirée de déverrouillage et une position engagée de verrouillage dans laquelle la douille (3) est reçue dans des perçages du disque (1) et du moyeu (2).

## Description

La présente invention concerne un dispositif d'assemblage d'un disque de frein sur un moyeu d'essieu de véhicule automobile.

La présente invention concerne plus particulièrement un dispositif qui permet la solidarisation d'un disque de frein et d'un moyeu de roue, lorsque la roue est ôtée.

La publication FR-2.098.842 décrit un disque de frein solidarisé à un moyeu par des vis de fixation. Une telle solution nécessite cependant le taraudage de l'alésage des trous de réception correspondants desdites vis ainsi que leur vissage.

La présente invention se propose de pallier ces inconvénients.

A cet effet, l'invention a pour objet un dispositif d'assemblage d'un disque de frein sur un moyeu de véhicule automobile, dans lequel le disque de frein est maintenu en appui sur un collet radial du moyeu, lesdits disque et moyeu comportant des perçages axiaux, caractérisé en ce que le disque est solidarisé au moyeu par une douille tubulaire déformable susceptible d'occuper une position retirée de déverrouillage et une position engagée de verrouillage dans laquelle la douille est reçue dans des perçages du disque et du moyeu.

Selon une caractéristique de la présente invention, la douille comporte une fente axiale.

Selon une caractéristique de la présente invention, la douille comporte une gorge centrale délimitée par des collets radiaux d'extrémité.

Selon une caractéristique de la présente invention, l'un des collets radiaux d'extrémité présente une forme tronconique.

On comprendra mieux les buts, aspects et caractéristiques de la présente invention d'après la description donnée ci-après d'un mode de réalisation de l'invention, présenté à titre d'exemple non limitatif, en se référant aux dessins annexés, dans lesquels :
- La figure 1 est une vue en perspective avec arrachement d'un disque de frein solidarisé au moyeu par un dispositif d'assemblage selon l'invention.
- La figure 2 est une vue axiale de la douille selon l'invention.
- La figure 3 est une représentation en perspective de la douille de la figure 2.

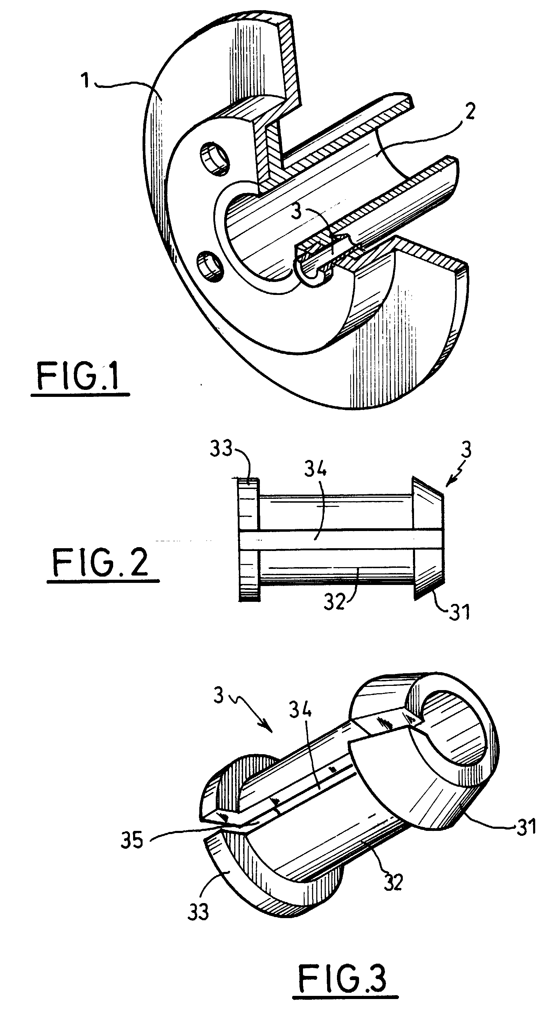

En se référant à la figure 1, la référence 1 désigne un disque de frein destiné à être monté sur le moyeu 2 d'un essieu de véhicule automobile.

Le disque 1 comprend une partie annulaire périphérique qui s'étend radialement vers l'extérieur à partir de la partie interne cylindrique du disque, dont les faces libres délimitent des pistes de frottement destinées à coopérer avec des garnitures de friction de type connu.

Le moyeu 2 est monté à rotation sur un organe d'essieu (non représenté), relié au corps du véhicule, par l'intermédiaire d'éléments de roulement de type connu.

Le moyeu 2 comporte un collet annulaire radial qui se prolonge, à partir de sa base par une portée cylindrique en saillie de la face extérieure du collet ; cette portée vient coopérer avec une ouverture circulaire du disque, centrée sur l'axe de symétrie axial dudit disque, ce qui permet le montage du disque sur le moyeu.

Le disque 1 comprend, une partie cylindrique qui se prolonge vers l'intérieur en une partie radiale formant flasque qui est maintenue axialement par la face externe du collet radial du moyeu.

Le flasque du disque 1 est fixé coaxialement sur le moyeu 2 par des douilles d'assemblage 3, dans le cas présent au nombre de trois, qui traversent le flasque du disque par des trous axiaux réalisés sur le disque et le moyeu et répartis sur un cercle imaginaire centré sur l'axe de rotation de la roue.

Ces trous peuvent être disposées coaxialement deux à deux par un positionnement angulaire du disque par rapport au moyeu ; ce positionnement angulaire est facilité par des pions de centrage portés par le moyeu et destinés à coopérer avec des trous complémentaires ménagés dans le disque.

En référence aux figures 2 et 3, chaque douille est constituée d'un corps tubulaire 3 comportant une fente axiale s'étendant sur toute sa longueur ; cette fente axiale permet de déformer radialement la douille pour faciliter son introduction dans les trous de montage prévus à cet effet sur le moyeu et sur le disque.

La douille comporte respectivement à ses extrémités antérieure et postérieure un premier et un second collets radiaux (31,33) qui délimitent une gorge centrale périphérique 32.

Le collet radial postérieur 33, de forme cylindrique, est au contact de la face externe du disque de frein.

Le collet radial antérieur 31 est au contact de la face intérieure du collet radial du moyeu comporte une partie externe évasée tronconiquement destinée à faciliter l'introduction de la douille dans un trou de réception.

Le diamètre interne de l'alésage du trou de montage de la douille est supérieur au diamètre extérieur de la douille au niveau de la gorge 32. Par contre, le diamètre du cylindre imaginaire ayant pour base le bord du collet radial postérieur est légèrément supérieur au diamètre interne du trou de réception en position libre (non déformée) de la douille.

La douille est destinée à être engagée dans un trou dans lequel elle est susceptible de coulisser axialement entre une position retirée de déverrouillage et une position engagée de verrouillage dans laquelle le disque est solidarisé au moyeu.

Pour fixer le disque sur le moyeu, il suffit d'amener la face interne du flasque du disque sensiblement au contact de la face externe du moyeu, les trous percés respectivement dans le moyeu et le disque de frein étant disposés coaxialement.

Le disque 1 de frein est emmanché et centré sur la portée cylindrique du moyeu 2, l'ensemble est alors solidarisé en rotation au moyen des douilles 3 engagées dans les trous prévus à cet effet sur le collet du moyeu 2 et sur le flasque du disque 1. L'introduction de chaque douille dans le trou correspondant est facilitée par la fente axiale 34 de la douille ainsi que par la section tronconique du collet radial antérieur 31.

La douille est introduite dans les trous précédents et est déplacée axialement par coulissement jusqu'à ce que la surface intérieure d'appui du collet radial postérieur soit en appui contre la face externe du disque.

Lorsque le collet radial tronconique 31 débouche du trou du collet radial du moyeu, la douille, s'expand radialement et vient solidariser le disque 1 et le moyeu 2.

L'alésage des trous de passage de la douille vient se loger dans la gorge 32 prévue à cet effet.

La douille selon l'invention peut en outre être aisément engagée et dégagée des trous de réception prévus à cet effet dans le moyeu et dans le disque.

En outre, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif d'assemblage d'un disque (1) de frein sur un moyeu (2) de véhicule automobile, dans lequel le disque de frein est maintenu en appui sur un collet radial du moyeu, lesdits disque et moyeu comportant des perçages axiaux, caractérisé en ce que le disque est solidarisé au moyeu par une douille (3) tubulaire déformable susceptible d'occuper une position retirée de déverrouillage et une position engagée de verrouillage dans laquelle la douille est reçue dans des perçages du disque et du moyeu.

2. Dispositif d'assemblage d'un disque de frein sur un moyeu selon la revendication 1, caractérisé en ce que la douille (3) comporte une fente (34) axiale.

3. Dispositif d'assemblage d'un disque de frein sur un moyeu selon la revendication 2, caractérisé en ce que la douille comporte une gorge centrale (32) délimitée par des collets radiaux (31,33) d'extrémité.

4. Dispositif d'assemblage d'un disque de frein sur un moyeu de véhicule automobile selon la revendication 3, caractérisé en ce que l'un des collets (31) radiaux d'extrémité présente une forme tronconique.
